# EUROPÄISCHE PATENTANMELDUNG

(11) **EP 3 812 626 A1**
(43) Veröffentlichungstag der Anmeldung: **28.04.2021**
(21) Anmeldenummer: 19205121.7
(22) Anmeldetag: 24.10.2019
(51) Int. Cl.: F16H 57/08

(54) **PLANETENGETRIEBE, INSBESONDERE MULTIPLANETENGETRIEBE, FÜR EINE WINDKRAFTANLAGE**

(71) Anmelder: Flender GmbH, 46395 Bocholt (DE)
(72) Erfinder: Dietz, Katrin, 45357 Essen (DE); Heßling, Pascal, 46395 Bocholt (DE); Voßschmidt, Tim, 45899 Gelsenkirchen (DE)
(74) Vertreter: Maier, Daniel Oliver

(57) **Zusammenfassung**

Die Erfindung betrifft ein Planetengetriebe (26) mit einem eine erste Trägerwange (40) und eine zweite Trägerwange (42) aufweisenden Planetenträger (44), an der ersten Trägerwange (40) und der zweiten Trägerwange (42) über jeweils einen Lagerbolzen (38) drehbar gelagerten Planetenrädern (30), einem mit den Planetenrädern (30) kämmenden Hohlrad (36), wobei zwischen einem Wangenaußendurchmesser (D) der ersten Trägerwange (40) und der zweiten Trägerwange (42) einerseits und einem Innendurchmesser des Hohlrads (36) andererseits eine Montagespiel ausgebildet ist, und mindestens einem die erste Trägerwange (40) und die zweite Trägerwange (42) auf einen definierten Abstand zueinander positionierenden Planetenträgersteg (68), wobei eine nach radial außen weisende Außenseite (74) des Planetenträgerstegs (68) zu einem radial inneren Kopfkreisradius einen Innenverzahnung (34) des Hohlrads (36) stärker nach radial innen beabstandet ist als die erste Trägerwange (40) und die zweite Trägerwange (42) und radial außerhalb zu einem Innendurchmesser der Planetenräder (30) angeordnet ist. Dadurch ist bei einem geringen Bauraumbedarf ein Planetengetriebe (26) mit einer hohen Leistungsdichte ermöglicht.

## Beschreibung

Die Erfindung betrifft ein Planetengetriebe, mit dessen Hilfe ein Drehmoment und eine Drehzahl gewandelt werden kann.

Aus EP 1 985 850 A1 ist ein Planetengetriebe für eine Windkraftanlage bekannt, bei dem zwei einander gegenüberliegende Trägerwangen eines Planetenträgers über axial verlaufende Planetenträgerstege miteinander verbunden sind. Eine nach radial außen weisenden zylinderförmige Mantelfläche des Planetenträgerstegs ist zu einem radial äußeren Rand der Trägerwangen deutlich nach radial innen versetzt ausgebildet und geht scharfkantig in die Trägerwangen über. Die zylinderförmige Mantelfläche des Planetenträgerstegs ist auf einem Radius zur Drehachse des Planetenträgers angeordnet, auf dem auch ein Wälzlager zwischen einem mit den Trägerwangen verbundenen Lagerbolzen und einem an dem Lagerbolzen gelagerten Planetenrad vorgesehen ist. Das Wälzlager ist in einen Innendurchmesser des Planetenrads eingesetzt.

Es besteht ein ständiges Bedürfnis bei einem geringen Bauraumbedarf eine hohe Leistungsdichte bei einem Planetengetriebe zu erreichen.

Es ist die Aufgabe der Erfindung Maßnahmen anzugeben, die bei einem geringen Bauraumbedarf ein Planetengetriebe mit einer hohen Leistungsdichte ermöglichen.

Die Lösung der Aufgabe erfolgt durch ein Planetengetriebe mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Erfindungsgemäß ist ein Planetengetriebe, insbesondere Multiplanetengetriebe für eine Windkraftanlage, vorgesehen mit einem eine erste Trägerwange und eine zweite Trägerwange aufweisenden Planetenträger, an der ersten Trägerwange und der zweiten Trägerwange über jeweils einen Lagerbolzen drehbar gelagerten Planetenrädern, einem mit den Planetenrädern kämmenden Hohlrad, wobei zwischen einem Wangenaußendurchmesser der ersten Trägerwange und der zweiten Trägerwange einerseits und einem Innendurchmesser des Hohlrads andererseits ein Montagespiel ausgebildet ist, und mindestens einem die erste Trägerwange und die zweite Trägerwange auf einen definierten Abstand zueinander positionierenden Planetenträgersteg, wobei eine nach radial außen weisende Außenseite des Planetenträgerstegs zu einem radial inneren Kopfkreisradius einen Innenverzahnung des Hohlrads stärker nach radial innen beabstandet ist als die erste Trägerwange und die zweite Trägerwange und radial außerhalb zu einem Innendurchmesser der Planetenräder angeordnet ist.

Um die Leistungsdichte in einem Antriebstrang einer Windkraftanlage zu erhöhen und einen guten Wirkungsgrad bei der zu übertragenden Leistung zu erhalten, ist es möglich mehrere Multiplanetengetriebe in Reihe zu schalten. Im Vergleich zu einem herkömmlichen Planetengetriebe mit drei Planetenrädern weist das Multiplanetengetriebe vier, fünf oder mehr Planetenräder auf und kann eine vergleichsweise geringe Standübersetzung aufweisen. Beispielsweise ist für das insbesondere als Multiplanetengetriebe ausgestaltete Planetengetriebe eine Standübersetzung i₀ von 1,0 < | i₀ | ≤ 3,0, insbesondere 1,1 ≤ |i₀| ≤ 2,5, vorzugsweise 1,2 ≤ |i₀| ≤ 2,0 und besonders bevorzugt 1,3 ≤ |i₀| ≤ 1,5 ausgebildet. Bei einer derartig kleinen Übersetzung sind ein besonders hoher Wirkungsgrad und damit eine hohe Leistungsdichte erreicht. Allerdings ergeben sich dadurch hohe Anforderungen an die Geometrie und den Bauraum des Planetengetriebes. Die Planetenräder weisen bei einer derartig geringen Standübersetzung im Vergleich zu einem mit den Planetenrädern kämmenden Sonnenrad einen geringen Durchmesser auf, so dass der radiale Abstand zwischen dem Kopfkreisdurchmesser der Außenverzahnung des Sonnenrads und dem Kopfkreisdurchmesser der Innenverzahnung des Hohlrads sehr eng ist. Zudem sollen die Planetenräder axial an den Trägerwangen abgestützt werden, so dass die Trägerwangen einen großen Wangenaußendurchmesser aufweisen müssen. Der Wangenaußendurchmesser ist hierbei so groß gewählt, dass die Trägerwangen bei der Montage gerade eben noch radial innerhalb an der Innenverzahnung des Hohlrads in axialer Richtung vorbeibewegt werden können. Zwischen dem Wangenaußendurchmesser der Trägerwangen und dem Kopfkreisdurchmesser der Innenverzahnung des Hohlrads ist dadurch ein eher kleines Spiel ausgebildet.

Im laufenden Betrieb des Planetengetriebes muss jedoch sichergestellt sein, dass der Planetenträger nicht an der Innenverzahnung anschlägt, was bei einem eher kleinen Spiel zwischen dem Planetenträgersteg und dem Hohlrad nicht mit ausreichender Sicherheit garantiert werden kann. Zwischen der Außenseite des Planetenträgerstegs und dem Kopfkreisradius der Innenverzahnung des Hohlrads ist somit ein über das Montagespiel zwischen den Trägerwangen und der Innenverzahnung hinausgehender Abstand vorgesehen. Da die Trägerwangen axial zu der Innenverzahnung des Hohlrads versetzt sind, kann ein sehr geringer radialer Abstand des Wangenaußendurchmessers zu dem Innendurchmesser des Hohlrads vorgesehen sein, während die Außenseite des Planetenträgerstegs zu dem Wangenaußendurchmesser der Trägerwangen etwas nach radial innen versetzt vorgesehen ist, um ein Anschlagen an der Innenverzahnung des Hohlrads auch unter Berücksichtigung von Fertigungs- und Herstellungstoleranzen sowie gegebenenfalls Wärmedehnungseffekten und/oder Fliehkrafteffekten sicher zu vermeiden.

Zudem kann ein Abstand a der Drehachsen von zwei in Umfangsrichtung nachfolgenden Planetenrädern mit einem Kopfkreisdurchmesser dₐ, der dem Außendurchmesser des Planetenrads entspricht, insbesondere lediglich 1,0 < a/dₐ ≤ 2,0, vorzugsweise 1,1 ≤ a/dₐ ≤ 1,5 und besonders bevorzugt 1,2 ≤ a/dₐ ≤ 1,3 betragen. Zwischen den in Umfangsrichtung nachfolgenden Planetenrädern und zwischen dem Kopfkreisradius der Innenverzahnung sowie der engsten Stelle zwischen den einander nachfolgenden Planetenrädern ergibt sich ein grob dreieckförmiger Zwickelbereich in dem der Planetenträgersteg ausgebildet sein kann. Der Planetenträgersteg ist hierbei möglichst nah an dem Hohlrad positioniert ohne an der Innenverzahnung des Hohlrads anzuschlagen. Hierbei kann die nach radial außen weisende Außenseite des Planetenträgerstegs in dem gemeinsamen Axialbereich mit der Innenverzahnung des Hohlrads geringfügig radial innerhalb zu dem Kopfkreisradius der Innenverzahnung des Hohlrads vorgesehen sein, wobei insbesondere die Außenseite des Planetenträgerstegs zumindest in einem Teil des von der Außenseite eingenommenen Umfangswinkelbereichs auf einem im Wesentlichen konstanten Abstand zu dem Kopfkreisradius der Innenverzahnung des Hohlrads auf einem im Wesentlichen konstanten Radius zu einer Drehachse des Planetengetriebes verläuft. Die Außenseite des Planetenträgerstegs ist hierbei mindestens radial außerhalb zu einem Innendurchmesser des benachbarten Planetenrads vorgesehen, über den das Planetenrad an einem mit den Trägerwangen verbundenen Lagerbolzen gelagert ist. Ein Punkt, an dem sich der Innendurchmesser des Planetenrads bezogen auf die Drehachse des Planetengetriebes, also der Drehachse des Sonnenrads, des Hohlrads und des Planetenträgers, maximal weit radial außen befindet, definiert einen Radius zu der Drehachse des Planetengetriebes, außerhalb dessen die Außenseite des Planetenträgerstegs vorgesehen ist.

Der Planetenträgersteg kann dadurch in einem Bauraum zwischen dem Sonnenrad und dem Hohlrad angeordnet sein, wo zwischen den in Umfangsrichtung nachfolgenden Planetenrädern genügend Bauraum für einen ausreichend großen Querschnitt für den Planetenträgersteg ausgebildet werden kann, um die Trägerwangen sicher und stabil aneinander abzustützen und/oder miteinander zu verbinden. Gleichzeitig kann der Querschnitt des Planetenträgerstegs weit genug von der Außenverzahnung der Planetenräder und der Innenverzahnung des Hohlrads positioniert sein, um ein Anschlagen sicher zu vermeiden und eine ausreichende Schmierung nicht zu beeinträchtigen. Stattdessen kann die Außenseite des Planetenträgerstegs sogar von der Innenverzahnung des Hohlrads abtropfendes Schmiermittel zurückhalten und/oder in Umfangsrichtung zu den Planetenrädern hin ableiten, so dass die Schmierung des Planetengetriebes bei einem reduzierten Schmiermittelbedarf sogar verbessert ist. Hierzu kann insbesondere die Außenseite des Planetenträgerstegs in radialer Richtung betrachtet einen Teil des jeweiligen Planetenrads überdecken, so dass sich von der Innenverzahnung des Hohlrads lösendes Schmiermittel nicht in Umfangsrichtung zwischen den Planetenrädern hindurch gelangt, sondern von der Außenseite des Planetenträgerstegs aufgefangen und an die Planetenräder abgeleitet wird. Zudem erlaubt der Zwickelbreich, in dem der Planetenträgersteg vorgesehen ist, eine vergleichsweise spitze Form des Planetenträgerstegs an den in tangentialer Richtung weisenden Enden der Außenseite, die ein Ablösen von Schmiermitteltropfen von dem Planetenträgersteg begünstigen, insbesondere ohne dass der Schmiermitteltropfen durch Adhäsionseffekte an einer von der Außenseite des Planetenträgerstegs weg weisenden Unterseite von dem benachbarten Planetenrad weggeleitet wird. Die dadurch erreichte verbesserte Schmierung kann den Wirkungsgrad und die Leistungsdichte des Planetengetriebes weiter verbessern. Durch die Anordnung des Planetenträgerstegs in einem Zwickelbereich kurz unterhalb des Hohlrads kann bei beengten Bauraumverhältnissen eine stabile Abstützung der Trägerwangen und eine verbesserte Schmierung erreicht werden, so dass bei einem geringen Bauraumbedarf ein Planetengetriebe mit einer hohen Leistungsdichte ermöglicht ist.

Das Planetengetriebe kann ein mit den Planetenrädern kämmendes Sonnenrad aufweisen, das koaxial radial innerhalb zu dem Hohlrad angeordnet ist. Ein über das Planetengetriebe übertragene Drehmomentfluss kann prinzipiell über das Sonnenrad oder den Planetenträger oder das Hohlrad eingeleitet und über das Sonnenrad oder den Planetenträger oder das Hohlrad ausgeleitet werden, sofern dieses Bauteil nicht bereits zum Einleiten des Drehmoments vorgesehen ist. Hierbei ist es möglich, dass das Sonnenrad, der Planetenträger und das Hohlrad drehbar gelagert sind, wobei alternativ von dem Sonnenrad, den Planetenträger oder das Hohlrad ein Bauteil permanent oder zeitweise abgebremst und/oder drehfest gekoppelt und/oder bewegungslos festgehalten ist. Beispielsweise kann das Hohlrad Teil eines feststehenden Getriebegehäuses sein. Der Lagerbolzen kann mit der ersten Trägerwange und mit der zweiten Trägerwange verbunden sein und insbesondere zwischen der ersten Trägerwange und der zweiten Trägerwange in axialer Richtung eingespannt sein. Vorzugsweise ist der Lagerbolzen bewegungsfest mit den Trägerwangen befestigt und das jeweilige Planetenrad relativ drehbar an dem Lagerbolzen gelagert. Das Planetengetriebe kann in einem Getriebegehäuse angeordnet sein, welches das Planetengetriebe vor Umwelteinflüssen und/oder Verschmutzungen schützt. Das Getriebegehäuse kann hierbei bewegungslos feststehend oder mit dem Hohlrad mitdrehend ausgeführt sein. Beispielsweise weist das Getriebegehäuse einen Ölsumpf zur Aufnahme eines Schmiermittels, insbesondere Schmieröl, auf.

Insbesondere ist die nach radial außen weisende Außenseite des Planetenträgerstegs zumindest zu einem Großteil eines Umfangs des Planetenrads radial außerhalb zu einem Fußkreisradius einer Außenverzahnung des Planetenrads angeordnet, wobei insbesondere ein Umfangswinkelbereich Δα des Planetenrads auf dem Fußkreisradius der Außenverzahnung radial innerhalb zu einem maximal radial außen liegenden Bereich der Außenseite des in einem gemeinsamen Axialbereich mit der Innenverzahnung des Hohlrads ausgebildeten Planetenträgerstegs von 270° ≤ Δα ≤ 360°, vorzugsweise 300° ≤ Δα ≤ 345° und besonders bevorzugt 315° ≤ Δα ≤ 330° verläuft.

Die Außenseite des Planetenträgerstegs weist in einem gemeinsamen Axialbereich, in dem die Innenverzahnung des Hohlrads in radialer Richtung betrachtet die Außenseite überdeckt, einen maximal radial äußeren Punkt auf, der einen Radius bezogen auf die Drehachse des Planetengetriebes, also der Drehachse des Sonnenrads, des Hohlrads und des Planetenträgers, definiert. Dieser gedachte Radius verläuft durch das Planetenrad derart hindurch, dass ein Großteil des Planetenrads radial innerhalb dieses Radius angeordnet ist und lediglich ein Teil der Außenverzahnung des Planetenrads über diesen Radius hinausreicht, um mit der Innenverzahnung des Hohlrads kämmen zu können. Hierbei kann dieser Radius vollständig außerhalb des Fußkreisradius der Außenverzahnung des Planetenrads verlaufen oder lediglich in einem kleinen Teil des Umfangs des Planetenrads in der Art einer schneidenden Sekante radial innerhalb des Fußkreisradius der Außenverzahnung des Planetenrads verlaufen. Der Planetenträgersteg kann dadurch besonders weit nach radial außen reichen, so dass sich eine entsprechend bessere Stabilität und Versteifung des Planetenträgers ergibt und die Schmierung der Planetenräder durch von dem Hohlrad abtropfendes Schmiermittel weiter verbessert werden kann. Gleichzeitig kann ein gerade noch ausreichendes Spiel zwischen dem Planetenträgersteg und der Innverzahnung des Hohlrads vorgesehen sein.

Vorzugsweise weist der Planetenträgersteg einen einstückig mit der ersten Trägerwange ausgebildeten ersten Teilsteg und einen einstückig mit der zweiten Trägerwange ausgebildeten zweiten Teilsteg auf, wobei insbesondere der erste Teilsteg und der zweite Teilsteg in axialer Richtung aneinander anliegen. Der Planetenträger kann dadurch im Wesentlichen zweischalig ausgestaltet sein, wobei insbesondere die erste Trägerwange mit dem ersten Teilsteg einerseits und die zweite Trägerwange mit dem zweiten Teilsteg andererseits im Wesentlichen identisch ausgestaltet sein können, wodurch Herstellungskosten reduziert werden können.

Besonders bevorzugt ist vorgesehen, dass der erste Teilsteg und/oder der zweite Teilsteg axial zu dem Hohlrad beabstandet im Wesentlichen auf dem Wangenaußendurchmesser in die erste Trägerwange und/oder in die zweite Trägerwange übergeht, wobei insbesondere die in einem gemeinsamen Axialbereich mit dem Hohlraum vorgesehene Außenseite des Planetenträgerstegs über einen gebogenen und/oder radiusförmigen Übergangsbereich in die erste Trägerwange und/oder in die zweite Trägerwange übergeht. Hierbei wird die Erkenntnis ausgenutzt, dass zwischen der jeweiligen Trägerwange und dem Hohlrad ein axialer Zwischenraum vorgesehen ist, durch den hindurch der Planetenträgersteg sich soweit nach radial außen an dem Hohlrad vorbei erstrecken kann, dass die Außenseite des Planetenträgerstegs an dem Außendurchmesser der jeweiligen Trägerwange ankommen kann. Ein radialer Sprung zwischen dem Außendurchmesser der Trägerwange und der Außenseite des Planetenträgerstegs sowie ein scharfkantiger Übergang kann dadurch vermieden werden. Dadurch können Kerbwirkungseffekte im Übergangsbereich zwischen den Teilstegen und der jeweils zugeordneten Trägerwange vermieden oder zumindest reduziert werden, wodurch die Festigkeit und Steifigkeit des Planetenträgers verbessert ist.

Insbesondere ist vorgesehen, dass der erste Teilsteg und/oder der zweite Teilsteg unter einem eine Übergangskante ausbildenden Winkel in die erste Trägerwange und/oder in die zweite Trägerwange übergeht. Dadurch, dass der Teilsteg nicht absatzlos, beispielsweise über einen asymptotischen Verlauf, in die Trägerwange übergeht, kann ein radialer Versatz zwischen dem Außendurchmesser der Trägerwange und dem radial innerhalb der Innenverzahnung des Hohlrads vorgesehenen Bereich der Außenseite des Planetenträgerstegs über einen vergleichsweise kleinen axialen Zwischenraum zwischen der Trägerwange und der Innenverzahnung des Hohlrads erreicht werden, so dass der axiale Bauraumbedarf gering gehalten werden kann.

In einer weiteren Ausführungsform ist vorgesehen, dass die erste Trägerwange und die zweite Trägerwange in einem gemeinsamen Umfangsbereich mit dem Planetenträgersteg eine Durchmesserverjüngung auf den Radius der nach radial außen weisende Außenseite des Planetenträgerstegs aufweist, wobei insbesondere die Durchmesserverjüngung über einen gebogene und/oder radiusförmigen Verlauf und/oder unter einem eine Übergangskante ausbildenden Winkel in den Wangenaußendurchmesser der ersten Trägerwange und/oder der zweiten Trägerwange übergeht. Hierbei wird die Erkenntnis ausgenutzt, dass im Bereich des Planetenträgerstegs kein Planetenrad vorgesehen sein kann, so dass in diesem Umfangsbereich eine über den Kopfkreisradius der Innenverzahnung des Hohlrads hinausgehende Erstreckung der Trägerwange, um einen axialen Anlaufbereich für ein Planetenrad auszubilden, gar nicht erforderlich ist. Zur Vermeidung von Kerbwirkungseffekten kann die Trägerwange eine entsprechend geeignete Außenkonturierung zwischen dem Außendurchmesser und dem Durchmesser der Durchmesserverjüngung aufweisen.

Vorzugsweise erstreckt der Planetenträgersteg sich nach radial innen mindestens bis zu einem Innendurchmesser des Planetenrads, insbesondere mindestens bis zu einer Drehachse des Planetenrads. Die Querschnittsfläche des Planetenträgerstegs kann dadurch entsprechend groß dimensioniert werden, um den Planetenträger auch bei großen zu übertragenden Drehmomenten ausreichend zu versteifen. Der Zwickelbereich radial innerhalb des Hohlrads zwischen den einander nachfolgenden Planetenrädern kann dadurch zu einem Großteil von dem Planetenträgersteg eingenommen sein.

Besonders bevorzugt ist in einem gemeinsamen Axialbereich mit einer Innenverzahnung des Hohlrads zwischen der Innenverzahnung des Hohlrads und der nach radial außen weisende Außenseite des Planetenträgerstegs ein Abstand a von 3,0 mm ≤ a ≤ 8,0 mm, insbesondere 4,0 mm ≤ a ≤ 7,0 mm, vorzugsweise 5,0 mm ≤ a ≤ 6,5 mm und besonders bevorzugt 5,5 mm ≤ a ≤ 6,0 mm ausgebildet ist. Bei einem derartigen Abstand kann ein Anschlagen des Hohlrads an dem Planetenträgersteg innerhalb der zugelassenem Fertigungs- und MontageToleranzen sicher vermieden werden. Gleichzeitig ist der Abstand groß genug, dass ein Strömungswiderstand zwischen den relativ zueinander drehenden Bauteilen vermieden oder zumindest vernachlässigbar klein ist.

Insbesondere ist zwischen dem Planetenträgersteg und dem jeweiligen benachbarten Planetenrad ein Spalt mit einer zu einem Großteil konstanten Spaltbreite s zwischen dem Planetenträgersteg und dem jeweiligen benachbarten Planetenrad ausgebildet, wobei bei einem Außendurchmesse dₐ des Planetenrads 0,01 ≤ s/dₐ ≤ 0,5, vorzugsweise 0,03 ≤ s/dₐ ≤ 0,2 und besonders bevorzugt 0,05 ≤ s/dₐ ≤ 0,1 gilt. Eine zu den Planetenrädern weisende Unterseite des Planetenträgerstegs kann im Wesentlichen auf einem konstanten Radius zu einer Drehachse des in diesem Bereichs benachbarten Planetenrad verlaufen, so dass auch der dazwischen ausgebildete Spalt eine konstante Spaltbreite zwischen der Unterseite und dem Kopfkreisradius der Außenverzahnung des jeweiligen Planetenrads aufweist. Bei einem derartigen Spaltabstand kann der Zwickelbereich radial innerhalb des Hohlrads zwischen den einander nachfolgenden Planetenrädern zu einem Großteil von dem Planetenträgersteg eingenommen werden.

Vorzugsweise sind mindestens drei, insbesondere mindestens sechs, vorzugsweise mindestens sieben und besonders bevorzugt mindestens acht Planetenräder vorgesehen, wobei insbesondere zwischen jedem Paar in Umfangsrichtung nachfolgender Planetenräder jeweils ein Planetenträgersteg vorgesehen ist. Durch die bauraumsparende Ausgestaltung des Planetenträgerstegs ist es möglich ein Multiplanetengetriebe mit entsprechend vielen in Umfangsrichtung eng hintereinander angeordneten Planetenrädern auszugestalten, ohne die Steifigkeit des Planetenträgers zu beeinträchtigen. Durch die hohe Anzahl der Planetenräder kann die Belastung des einzelnen Planetenrads reduziert werden, wodurch hohe Drehmomente mit einem hohen Wirkungsgrad und einer hohen Leistungsdichte übertragen werden können.

Besonders bevorzugt weist die erste Trägerwange und/oder die zweite Trägerwange eine Anlaufscheibe zum axialen Anlaufen des Planetenrads auf. Die Anlaufscheibe ist insbesondere über den vollen Querschnitt des Planetenrads von der jeweiligen Trägerwange abgestützt.

Insbesondere ist zwischen dem Planetenrad und dem Lagerbolzen ein Gleitlager ausgebildet. Der Bauraumbedarf in radialer Richtung zwischen dem Planetenrad und dem Lagerbolzen, der ansonsten für ein Wälzlager benötigt würde, kann dadurch deutlich reduziert werden. Beispielsweise ist eine im Vergleich zu einem Wälzlager deutlich dünnere Gleitlagerbuchse auf dem jeweiligen Lagerbolzen aufgesteckt, an der das Planetenrad relativ drehbar abgleiten kann. Dies ermöglicht es Planetenräder mit einem entsprechend kleinen Durchmesser zu verwenden und/oder den Durchmesser des Lagerbolzens zu vergrößern, wodurch der Planetenträger weiter versteift werden kann.

Vorzugsweise verläuft die Außenseite des Planetenträgerstegs zumindest in einem Teil des von der Außenseite eingenommenen Umfangswinkelbereichs auf einem im Wesentlichen konstanten Abstand zu dem Kopfkreisradius der Innenverzahnung des Hohlrads. Die Außenseite des Planetenträgerstegs kann auf einem im Wesentlichen konstanten Radius zu einer Drehachse des Planetengetriebes möglichst nah an der Innenverzahnung verlaufen. Dadurch kann der in dem Zwickelbereich zwischen dem Hohlrad und den einander nachfolgenden Planetenrädern ausgebildete Bauraum in Umfangsrichtung und/oder nach radial außen möglichst gut ausgenutzt werden, wodurch die Festigkeit und Stabilität des Planetenträgerstegs verbessert ist.

Besonders bevorzugt ist der Planetenträger in einem Getriebegehäuse gelagert, wobei in dem Getriebegehäuse ein Schmiermittel zur Schmierung des Hohlrads und der Planetenräder, insbesondere durch Tauchschmierung und/oder Spritzschmierung, aufgenommen ist. Das in dem Getriebegehäuse eingebrachte Schmiermittel kann zur Schmierung des Planetengetriebes immer wieder verwendet werden. Da die Planetenträgerstege die Schmierung der Planetenräder unterstützen, ist eine einfache und kostengünstige Schmierung des Planetengetriebes bereits ausreichend.

Die Erfindung betrifft ferner einen Antriebsstrang für eine Windkraftanlage mit einer mit einem windkraftangetriebenen Rotor verbindbaren Rotorwelle, einer Motorwelle einer im Generatormodus betreibbaren elektrischen Maschine und einem die Rotorwelle mit der Motorwelle drehmomentübertragend verbindenden Getriebe zur Wandlung eines Drehmoments und einer Drehzahl, wobei das Getriebe mindestens ein Planetengetriebe, das wie vorstehend beschrieben aus- und weitergebildet sein kann, aufweist, wobei insbesondere das Getriebe mindestens zwei oder mindestens drei in Reihe geschaltete Planetengetriebe, die wie vorstehend beschrieben aus- und weitergebildet sein können, aufweist. Durch die Anordnung des Planetenträgerstegs in einem Zwickelbereich kurz unterhalb des Hohlrads kann bei beengten Bauraumverhältnissen eine stabile Abstützung der Trägerwangen und eine verbesserte Schmierung des Planetengetriebes erreicht werden, so dass bei einem geringen Bauraumbedarf ein Antriebsstrang mit einer hohen Leistungsdichte ermöglicht ist.

Die Erfindung betrifft ferner eine Windkraftanlage zur Erzeugung von Energie aus Windkraft, mit einem Standturm, einer an einem oberen Ende des Standturms angebrachten Gondel, einem windkraftantreibbaren Rotor, einer im Generatorbetrieb betreibbaren elektrischen Maschine und einem von der Gondel aufgenommenen Antriebsstrang, der wie vorstehend beschrieben aus- und weitergebildet sein kann, zur drehmomentübertragenen Koppelung des Rotors mit der elektrischen Maschine und Wandlung eines von dem Rotor eingeleiteten Drehmoments. Durch die Anordnung des Planetenträgerstegs in einem Zwickelbereich kurz unterhalb des Hohlrads kann bei beengten Bauraumverhältnissen eine stabile Abstützung der Trägerwangen und eine verbesserte Schmierung des Planetengetriebes erreicht werden, so dass bei einem geringen Bauraumbedarf eine Windkraftanlage mit einer hohen Leistungsdichte ermöglicht ist.

Ein weiterer Aspekt der Erfindung betrifft eine Industrie-applikation. Die Industrie-Applikation kann ein Antriebsmittel aufweisen, das beispielsweise als elektrische Maschine, Brennkraftmaschine, Hydraulikmotor oder windkraftgetriebener Rotor ausgestaltet sein kann. Das Antriebsmittel kann mit einem Getriebe zur Wandlung eines Drehmoments und einer Drehzahl der von dem Antriebsmittel erzeugten Leistung gekoppelt sein. Das Getriebe der Industrie-Applikation, das mindestens ein Planetengetriebe, das wie vorstehend beschrieben aus- und weitergebildet sein kann, aufweist, kann wiederum drehmomentübertragend mit einer mechanischen Anwendung gekoppelt sein, in der über das Getriebe eingeleitete mechanische Energie genutzt werden kann. Bei der mechanischen Anwendung handelt es sich beispielsweise um eine Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse, Schrottpresse, Zerkleinerer für recyclingfähige Materialen aus, gegebenenfalls zuvor getrennten und/oder sortierten, Abfällen oder Ähnliches. Durch die Anordnung des Planetenträgerstegs in einem Zwickelbereich kurz unterhalb des Hohlrads kann bei beengten Bauraumverhältnissen eine stabile Abstützung der Trägerwangen und eine verbesserte Schmierung des Planetengetriebes erreicht werden, so dass bei einem geringen Bauraumbedarf eine Industrieapplikation mit einer hohen Leistungsdichte ermöglicht ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- FIG 1: eine schematische perspektivische Ansicht einer Windkraftanlage,
- FIG 2: eine schematische geschnittene Draufsicht auf einen Teil eines Planetengetriebes für die Windkraftanlage aus FIG 1,
- FIG 3: eine schematische Schnittansicht des Planetengetriebes aus FIG 2,
- FIG 4: eine schematische perspektivische Ansicht eines Planetenträgers des Planetengetriebes aus FIG 2,
- FIG 5: eine schematische perspektivische Detailansicht des Planetenträgers aus FIG 4,
- FIG 6: eine schematische Schnittansicht des Planetenträgers aus FIG 4,
- FIG 7: eine schematische perspektivische Detailansicht eines alternativen Planetenträgers für das Planetengetriebe aus FIG 2 und
- FIG 8: eine schematische Prinzipdarstellung einer Industrie-applikation.

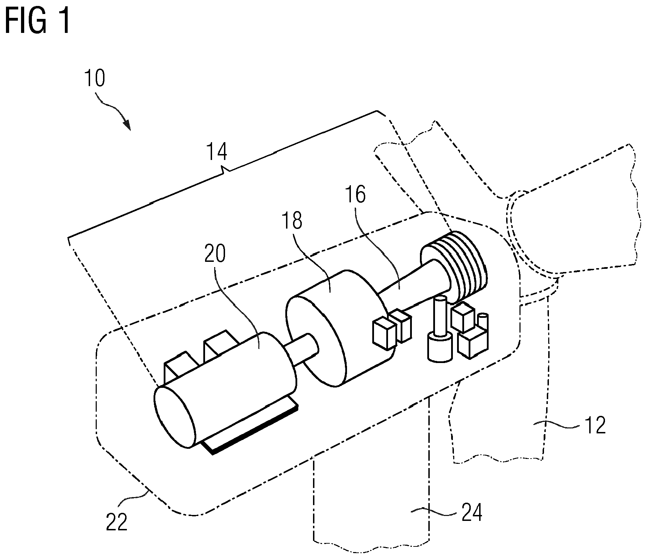

Die in FIG 1 dargestellte Windkraftanlage 10 kann zur Erzeugung von elektrischer Energie aus Windkraft verwendet werden. Hierzu weist die Windkraftanlage 10 einen Rotor 12 auf, der durch Wind windkraftbetrieben in Drehung versetzt werden kann. Der Rotor 12 ist an einen Antriebsstrang 14 angekoppelt. Hierzu ist der Rotor 12 mit einer Rotorwelle 16 verbunden, die innerhalb des Antriebsstrangs 14 mit einem Getriebe 18 gekoppelt ist, um das über den Rotor 12 und die Rotorwelle 16 eingeleitete Drehmoment zu wandeln. Das in dem Getriebe 18 gewandelte Drehmoment wird einer im Generatormodus betriebenen elektrischen Maschine 20 zugeführt. Die von der elektrischen Maschine 20 erzeugte elektrische Energie kann einer wiederaufladbaren Batterie und/oder einem Stromnetz zugeführt werden. Der Antriebsstrang 14 ist im dargestellten Ausführungsbeispiel vollständig in einer Gondel 22 untergebracht, die an einem oberen freien Ende eines Standturms 24 angebracht ist.

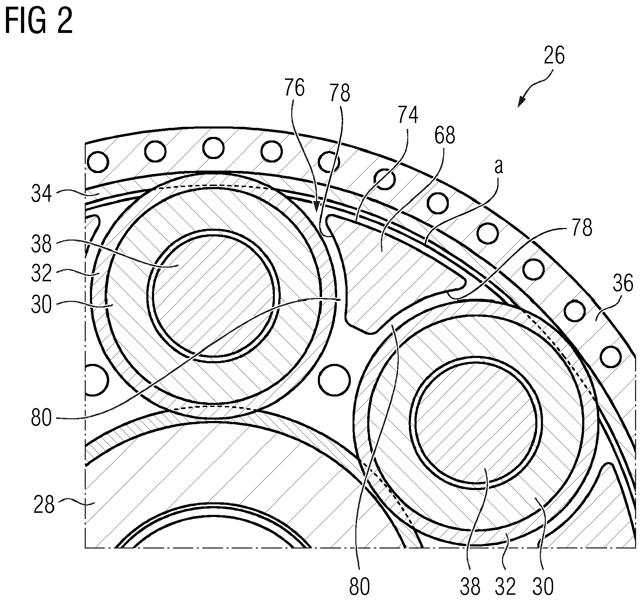

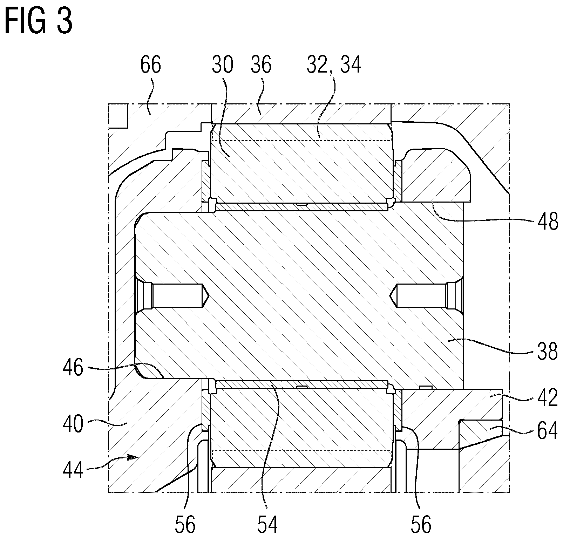

Das Getriebe 18 weist mindestens ein in FIG 2 und FIG 3 näher dargestelltes Planetengetriebe 26 auf, wobei insbesondere das Getriebe 18 mehrere in Reihe geschaltete Planetengetriebe 26 aufweist. Das Planetengetriebe 26 weist ein um eine Drehachse des Planetengetriebes 26 drehbares Sonnenrad 28 auf, das mit Planetenrädern 30 kämmt. Insbesondere ist das Planetengetriebe 26 als Multiplanetengetriebe ausgestaltet, das mehr als drei Planetenräder 30 aufweist, die insbesondere alle auf einem gemeinsamen Radius bezogen auf die Drehachse des Planetengetriebes 26 in Umfangsrichtung hintereinander angeordnet sind. Die Planetenräder 30 wiederum kämmen mit ihrer Außenverzahnung 32 mit einer Innenverzahnung 34 eines koaxial zu dem Sonnenrad 28 angeordneten Hohlrad 36.

Das jeweilige Planetenrad 30 ist auf einem Lagerbolzen 38 drehbar gelagert, wobei der Lagerbolzen 38 mit einer ersten Trägerwange 40 und einer zweiten Trägerwange 42 eines Planetenträgers 44 befestigt ist. Im dargestellten Ausführungsbeispiel ist der Lagerbolzen 38 über eine Durchgangsöffnung 48 der zweiten Trägerwange 42 in einer Aufnahmetasche 46 der ersten Trägerwange 40 teilweise eingesteckt verliersicher zurückgehalten.

Auf dem Lagerbolzen 38 ist eine Gleitlagerhülse 54 aufgesteckt, so dass zwischen dem Planetenrad 30 ein Gleitlager ausgebildet ist. Alternativ kann anstatt des Gleitlagers ein Wälzlager vorgesehen sein. Die erste Trägerwange 40 und die zweite Trägerwange 42 weisen an ihren zum Planetenrad 30 weisenden Axialseiten jeweils eine Anlaufscheibe 56 auf, gegen die das Planetenrad 30 im Betrieb axial anlaufen kann. Der Planetenträger 44 kann über ein Wälzlager 64 an einem Getriebegehäuse 66 relativ drehbar gelagert sein, wobei im dargestellten Ausführungsbeispiel das Hohlrad 36 über einen als Befestigungsflansch ausgestalteten Radiusbereich drehfest mit dem Getriebegehäuse 66 verbunden ist. Das Getriebegehäuse 66 kann bewegungslos fixiert oder drehbar gelagert sein.

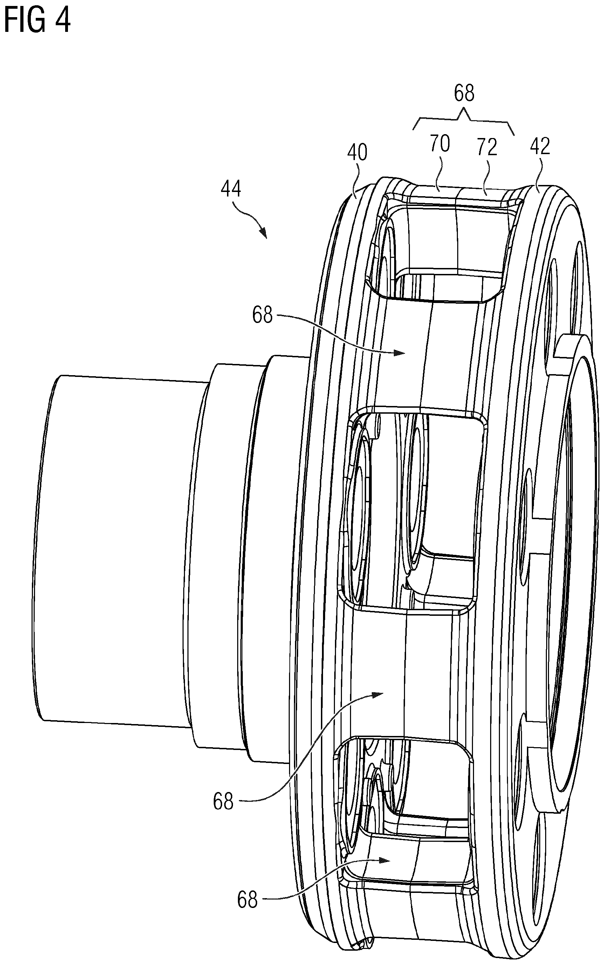

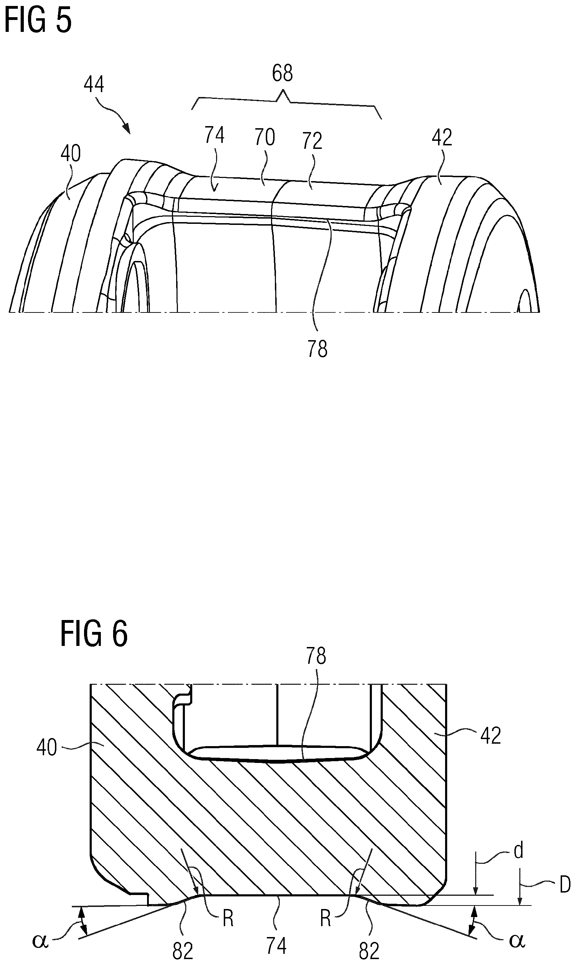

Bei dem in FIG 4 und FIG 5 separat dargestellten Planetenträger 44 sind die erste Trägerwange 40 und die zweite Trägerwange 42 über einen Planetenträgersteg 68 auf einen definierten Abstand zueinander positioniert. Hierzu weist der Planetenträgersteg 68 einen einstückig mit der ersten Trägerwange 40 ausgestalteten ersten Teilsteg 70 und einen mit der zweiten Trägerwange 42 ausgestalteten zweiten Teilsteg 72 auf, die beispielswiese an ihren aufeinander zu weisenden Axialseiten aneinander anliegen. Die Teilstege 70, 72 gehen auf dem Außenradius der Trägerwangen 40, 42 in die jeweilige Trägerwange 40, 42 über, wobei der Planetenträgersteg 68 allerdings etwas nach radial innen gebogen verläuft, so dass in einem gemeinsamen Axialbereich mit der Innenverzahnung 34 des Hohlrads 36 zwischen einer Außenseite 74 des Planetenträgerstegs 68 und der Innenverzahnung 34 ein besonders kleiner Abstand a ausgebildet ist. Der Planetenträgersteg 68 füllt insbesondere zu einem großen Teil einen Zwickelbereich 76 aus, der sich zwischen den einander nachfolgenden Planetenrädern 30 und dem Hohlrad 36 ergibt. Insbesondere kann eine zu dem jeweiligen Planetenrad 30 weisende Innenseite 78 dem Außenradius des zugeordneten Planetenrads 30 folgen und zwischen dem Planetenträgersteg 68 und dem Planetenrad 30 einen Spalt 80 mit einer im Wesentlichen konstanten Spaltbreite ausbilden.

Wie in FIG 6 dargestellt kann ein Durchmesser d der Außenseite 74 des Planetenträgerstegs 68 in seinem in axialer Richtung mittleren Bereich, der radial innerhalb zu dem Kopfkreisradius der Innenverzahnung 34 des Hohlrads 36 positioniert ist, soweit zu einem Wangenaußendurchmesser D der Trägerwangen 40, 42 nach radial innen versetzt sein, dass die Außenseiten 74 nicht an dem Hohlrad 36 anschlagen kann und radial außerhalb zu einem Innendurchmesser des Planetenrads 30, insbesondere radial außerhalb zu einem Fußkreisradius der Außenverzahnung 32 des Planetenrads 30, positioniert ist. Zudem geht die Außenseite 74 über einen Radius R und unter einem auf dem Wangenaußendurchmesser D eine Übergangskante 82 ausbildenden Winkel α ohne signifikante Kerbwirkung in die jeweilige Trägerwange 40, 42 über.

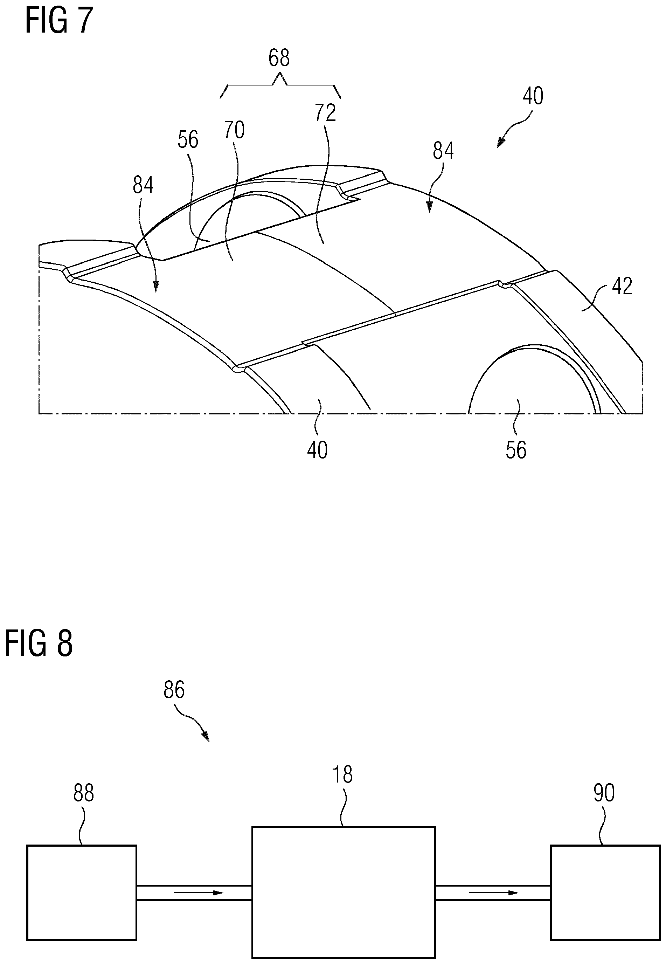

Wie in FIG 7 dargestellt, können alternativ zu der in FIG 6 dargestellten Ausgestaltung des Planetenträgers 44 die Trägerwangen 40, 42 im Umfangsbereich des Planetenträgerstegs 68 eine Durchmesserverjüngung 84 auf den Durchmesse d der Außenseite 74 des Planetenträgerstegs 68 aufweisen. In diesem Fall kann die Durchmesserverjüngung 84 in Umfangsrichtung analog zu dem in FIG 6 dargestellten Übergang zwischen der Außenseite 74 des Planetenträgerstegs 68 und dem Trägerwangen 40, 42 die Durchmesserverjüngung 84 in den Außendurchmesser D der Trägerwangen 40, 42 übergehen.

Das am Beispiel einer Windkraftanlage 10 erläuterte Getriebe 18 mit dem mindestens einen Planetengetriebe 26 kann auch in einer anderen Industrie-Applikation 86 eingesetzt werden, wie in FIG 8 dargestellt. Die Industrie-Applikation 86 weist ein Antriebsmittel 88 auf, das beispielsweise als elektrische Maschine, Brennkraftmaschine oder Hydraulikmotor ausgestaltet ist. Das Antriebsmittel 88 ist drehmomentübertragend mit dem Getriebe 18 gekoppelt, welches das gewandelte Drehmoment an eine mechanische Anwendung 90 überträgt. Das Antriebsmittel 88 ist zum Abgeben einer Antriebsleistung ausgebildet, die über eine erste Welle 92 dem Getriebe 18 zugeführt wird und von dem Getriebe 18 über eine zweite Welle 94 der mechanischen Anwendung 90 zugeführt wird. Insbesondere ist die Drehzahl der ersten Welle 92 größer als die Drehzahl der zweiten Welle 94. Bei der mechanischen Anwendung 90 handelt es sich beispielsweise um eine Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse, Schrottpresse, Zerkleinerer für recyclingfähige Materialen aus, gegebenenfalls zuvor getrennten und/oder sortierten, Abfällen oder Ähnliches.

## Patentansprüche

1. Planetengetriebe, insbesondere Multiplanetengetriebe für eine Windkraftanlage (10), mit
einem eine erste Trägerwange (40) und eine zweite Trägerwange (42) aufweisenden Planetenträger (44),
an der ersten Trägerwange (40) und der zweiten Trägerwange (42) über jeweils einen Lagerbolzen (38) drehbar gelagerten Planetenrädern (30),
einem mit den Planetenrädern (30) kämmenden Hohlrad (36), wobei zwischen einem Wangenaußendurchmesser (D) der ersten Trägerwange (40) und der zweiten Trägerwange (42) einerseits und einem Innendurchmesser des Hohlrads (36) andererseits ein Montagespiel ausgebildet ist, und
mindestens einem die erste Trägerwange (40) und die zweite Trägerwange (42) auf einen definierten Abstand zueinander positionierenden Planetenträgersteg (68),
wobei eine nach radial außen weisende Außenseite (74) des Planetenträgerstegs (68) zu einem radial inneren Kopfkreisradius einer Innenverzahnung (34) des Hohlrads (36) stärker nach radial innen beabstandet ist als die erste Trägerwange (40) und die zweite Trägerwange (42) und radial außerhalb zu einem Innendurchmesser der Planetenräder (30) angeordnet ist.

2. Planetengetriebe nach Anspruch 1,
**dadurch gekennzeichnet, dass** die nach radial außen weisende Außenseite (74) des Planetenträgerstegs (68) zumindest zu einem Großteil eines Umfangs des Planetenrads (30) radial außerhalb zu einem Fußkreisradius einer Außenverzahnung (32) des Planetenrads (30) angeordnet ist, wobei insbesondere ein Umfangswinkelbereich Δα des Planetenrads (30) auf dem Fußkreisradius der Außenverzahnung (32) radial innerhalb zu einem maximal radial außen liegenden Bereich der Außenseite (74) des in einem gemeinsamen Axialbereich mit der Innenverzahnung (34) des Hohlrads (36) ausgebildeten Planetenträgerstegs (68) von 270° ≤ Δα ≤ 360°, vorzugsweise 300° ≤ Δα ≤ 345° und besonders bevorzugt 315° ≤ Δα ≤ 330° verläuft.

3. Planetengetriebe nach Anspruch 1 oder 2,
**dadurch gekennzeichnet, dass** der Planetenträgersteg (68) einen einstückig mit der ersten Trägerwange (40) ausgebildeten ersten Teilsteg (70) und einen einstückig mit der zweiten Trägerwange (42) ausgebildeten zweiten Teilsteg (42) aufweist, wobei insbesondere der erste Teilsteg (70) und der zweite Teilsteg (72) in axialer Richtung aneinander anliegen.

4. Planetengetriebe nach Anspruch 3,
**dadurch gekennzeichnet, dass** der erste Teilsteg (70) und/oder der zweite Teilsteg (72) axial zu dem Hohlrad (36) beabstandet im Wesentlichen auf dem Wangenaußendurchmesser (D) in die erste Trägerwange (40) und/oder in die zweite Trägerwange (42) übergeht, wobei insbesondere die in einem gemeinsamen Axialbereich mit dem Hohlraum (36) vorgesehene Außenseite (74) des Planetenträgerstegs (68) über einen gebogenen und/oder radiusförmigen Übergangsbereich in die erste Trägerwange (40) und/oder in die zweite Trägerwange (42) übergeht.

5. Planetengetriebe nach Anspruch 3,
**dadurch gekennzeichnet, dass** die erste Trägerwange (40) und die zweite Trägerwange (42) in einem gemeinsamen Umfangsbereich mit dem Planetenträgersteg (68) eine Durchmesserverjüngung (84) auf den Radius der nach radial außen weisende Außenseite (74) des Planetenträgerstegs (68) aufweist, wobei insbesondere die Durchmesserverjüngung (84) über einen gebogene und/oder radiusförmigen Verlauf und/oder unter einem eine Übergangskante ausbildenden Winkel in den Wangenaußendurchmesser der ersten Trägerwange (40) und/oder der zweiten Trägerwange (42) übergeht.

6. Planetengetriebe nach einem der Ansprüche 1 bis 5,
**dadurch gekennzeichnet, dass** der Planetenträgersteg (68) sich nach radial innen mindestens bis zu einem Innendurchmesser des Planetenrads (30), insbesondere mindestens bis zu einer Drehachse des Planetenrads (30) erstreckt.

7. Planetengetriebe nach einem der Ansprüche 1 bis 6,
**dadurch gekennzeichnet, dass** in einem gemeinsamen Axialbereich mit einer Innenverzahnung (34) des Hohlrads (36) zwischen der Innenverzahnung (34) des Hohlrads (36) und der nach radial außen weisende Außenseite (74) des Planetenträgerstegs (68) ein Abstand a von 3,0 mm ≤ a ≤ 8,0 mm, insbesondere 4,0 mm ≤ a ≤ 7,0 mm, vorzugsweise 5,0 mm ≤ a ≤ 6,5 mm und besonders bevorzugt 5,5 mm ≤ a ≤ 6,0 mm ausgebildet ist.

8. Planetengetriebe nach einem der Ansprüche 1 bis 7,
**dadurch gekennzeichnet, dass** zwischen dem Planetenträgersteg (68) und dem jeweiligen benachbarten Planetenrad (30) ein Spalt (80) mit einer zu einem Großteil konstanten Spaltbreite s zwischen dem Planetenträgersteg (68) und dem jeweiligen benachbarten Planetenrad (30) ausgebildet ist, wobei bei einem Außendurchmesser dₐ des Planetenrads (30) insbesondere 0,01 ≤ s/dₐ ≤ 0,5, vorzugsweise 0,03 ≤ s/dₐ ≤ 0,2 und besonders bevorzugt 0,05 ≤ s/dₐ ≤ 0,1 gilt.

9. Planetengetriebe nach einem der Ansprüche 1 bis 8,
**dadurch gekennzeichnet, dass** mindestens drei, insbesondere mindestens sechs, vorzugsweise mindestens sieben und besonders bevorzugt mindestens acht Planetenräder (30) vorgesehen sind, wobei insbesondere zwischen jedem Paar in Umfangsrichtung nachfolgender Planetenräder (30) jeweils ein Planetenträgersteg (68) vorgesehen ist.

10. Planetengetriebe nach einem der Ansprüche 1 bis 9,
**dadurch gekennzeichnet, dass** die erste Trägerwange (40) und/oder die zweite Trägerwange (42) eine Anlaufscheibe (56) zum axialen Anlaufen des Planetenrads (30) aufweist.

11. Planetengetriebe nach einem der Ansprüche 1 bis 10,
**dadurch gekennzeichnet, dass** zwischen dem Planetenrad (30) und dem Lagerbolzen (38) ein Gleitlager ausgebildet ist.

12. Planetengetriebe nach einem der Ansprüche 1 bis 11,
**dadurch gekennzeichnet, dass** die Außenseite (74) des Planetenträgerstegs (68) zumindest in einem Teil des von der Außenseite (74) eingenommenen Umfangswinkelbereichs auf einem im Wesentlichen konstanten Abstand zu dem Kopfkreisradius der Innenverzahnung (34) des Hohlrads (36) verläuft.

13. Planetengetriebe nach einem der Ansprüche 1 bis 12,
**dadurch gekennzeichnet, dass** der Planetenträger (40) in einem Getriebegehäuse (66) gelagert ist, wobei in dem Getriebegehäuse (66) ein Schmiermittel zur Schmierung des Hohlrads (36) und der Planetenräder (30), insbesondere durch Tauchschmierung und/oder Spritzschmierung, aufgenommen ist.

14. Antriebsstrang für eine Windkraftanlage (10) mit einer mit einem windkraftangetriebenen Rotor (12) verbindbaren Rotorwelle (16), einer Motorwelle einer im Generatormodus betreibbaren elektrischen Maschine (20) und einem die Rotorwelle (16) mit der Motorwelle drehmomentübertragend verbindenden Getriebe (18) zur Wandlung eines Drehmoments und einer Drehzahl, wobei das Getriebe (18) mindestens ein Planetengetriebe (26) nach einem der Ansprüche 1 bis 13 aufweist, wobei insbesondere das Getriebe (18) mindestens zwei oder mindestens drei in Reihe geschaltete Planetengetriebe (26) nach einem der Ansprüche 1 bis 13 aufweist.

15. Windkraftanlage zur Erzeugung von Energie aus Windkraft, mit einem Standturm (24), einer an einem oberen Ende des Standturms (24) angebrachten Gondel (22), einem windkraftantreibbaren Rotor (12), einer im Generatorbetrieb betreibbaren elektrischen Maschine (20) und einem von der Gondel (22) aufgenommenen Antriebsstrang (14) nach Anspruch 14 zur drehmomentübertragenen Koppelung des Rotors (12) mit der elektrischen Maschine (20) und Wandlung eines von dem Rotor (12) eingeleiteten Drehmoments.
